# EUROPEAN PATENT APPLICATION

(11) **EP 4 525 002 A1**
(43) Date of publication of application: **19.03.2025**
(21) Application number: 23803647.9
(22) Date of filing: 12.05.2023
(51) Int. Cl.: H01B 13/00, H01B 1/06, H01B 1/10, H01M 10/0562

(54) **METHOD AND APPARATUS FOR PRODUCING SULFIDE-BASED SOLID ELECTROLYTE**

(30) Priority: 13.05.2022 JP 2022079716
(71) Applicant: AGC INC., Chiyoda-ku, Tokyo 1008405 (JP)
(72) Inventor: OMORI Norifumi, Tokyo 100-8405 (JP); FUJII Naoki, Tokyo 100-8405 (JP)
(74) Representative: Müller-Boré & Partner Patentanwälte PartG mbB
(86) International application number: PCT/JP2023/018011
(87) International publication number: WO 2023/219173

(57) **Abstract**

The present invention pertains to a method for producing a sulfide-based solid electrolyte, the method comprising: heating and melting a first sulfide-based solid electrolyte raw material in a furnace to obtain a first melt; supplying a second sulfide-based solid electrolyte raw material to the first melt; heating and melting a resulting mixture in a sulfur- containing gas atmosphere; and cooling a resulting second melt.

## Description

### TECHNICAL FIELD

The present invention relates to a method for producing a sulfide-based solid electrolyte and an apparatus for producing the same.

### BACKGROUND ART

Lithium-ion secondary batteries are widely used for a portable electronic apparatus such as a mobile phone and a notebook computer. In the related art, a liquid electrolyte has been used in a lithium-ion secondary battery. On the other hand, attention has been paid to an all-solid-state lithium-ion secondary battery in which a solid electrolyte is used as an electrolyte of a lithium-ion secondary battery in recent years, from the viewpoint of improving safety, charging and discharging at a high speed, and reducing the size of a case.

Examples of the solid electrolyte used in the all-solid-state lithium-ion secondary battery include a sulfide-based solid electrolyte.

When a sulfide-based solid electrolyte is synthesized by a melting method, it is necessary to heat a mixed raw material at a temperature of, for example, 600°C or higher. However, since a boiling point of a raw material, that is, phosphorus pentasulfide (P₂S₅), is low at 514°C, heating the mixed raw material at a high temperature causes a part of the raw material to volatilize, making it difficult to control a composition of an obtained solid electrolyte.

As a means of solving the above problem, for example, Patent Literature 1 discloses a method of preventing volatilization of raw material components by synthesizing a composite compound containing lithium, sulfur, and phosphorus in advance and conducting melting using the composite compound as a raw material.

As another solution, Patent Literature 2 discloses a method for synthesizing a sulfide-based solid electrolyte by compressing and heating a raw material to melt the raw material, thereby preventing components from volatilizing, and then cooling and solidifying the raw material.

Patent Literature 3 discloses a method in which raw materials are mixed in a predetermined stoichiometric mixture ratio, and then a mixture is heated and melted under a condition of excess sulfur, thereby preventing volatilization of sulfur.

### CITATION LIST

### PATENT LITERATURE

Patent Literature 1: JP2012-43654A
Patent Literature 2: JP5640665B
Patent Literature 3: JP3284215B

### SUMMARY OF INVENTION

### TECHNICAL PROBLEM

However, in the method of Patent Literature 1, since it is necessary to synthesize a composite compound containing lithium, sulfur, and phosphorus in advance, a production step is complicated and time-consuming.

In the method of Patent Literature 2, since the raw material is required to be compressed, an equipment structure becomes very complicated, making it difficult to mass-produce a solid electrolyte.

In the method of Patent Literature 3, although it is possible to prevent the evaporation of sulfur, evaporation of phosphorus cannot be prevented, which makes composition control difficult.

In view of the above circumstances, an object of the present invention is to provide a method for producing a large amount of sulfide-based solid electrolyte in a short time while preventing volatilization of a raw material and an apparatus for producing the same.

### SOLUTION TO PROBLEM

As a result of intensive studies, the present inventors have found that, by supplying a second sulfide-based solid electrolyte raw material to a melt obtained by heating and melting a first sulfide-based solid electrolyte raw material in a furnace, a temperature of the second sulfide-based solid electrolyte raw material supplied to the melt increases rapidly, and the second sulfide-based solid electrolyte raw material can be instantaneously melted while being mixed with the melt. Accordingly, it is possible to produce a large amount of sulfide-based solid electrolyte in a short time while preventing volatilization of a raw material, and thus the present invention is completed.

That is, the present invention relates to the following [1] to [16].
[1] A method for producing a sulfide-based solid electrolyte, the method including:
   heating and melting a first sulfide-based solid electrolyte raw material in a furnace to obtain a first melt;
   supplying a second sulfide-based solid electrolyte raw material to the first melt;
   heating and melting an obtained mixture in a gas atmosphere containing a sulfur element; and
   cooling an obtained second melt.
[2] The method for producing a sulfide-based solid electrolyte according to the [1], in which the second sulfide-based solid electrolyte raw material is supplied at a rate of 5 mass%/min or less with respect to 100 mass% of the first melt.
[3] The method for producing a sulfide-based solid electrolyte according to the [1] or [2], in which a composition of the first sulfide-based solid electrolyte raw material is the same as a composition of the second sulfide-based solid electrolyte raw material.
[4] The method for producing a sulfide-based solid electrolyte according to the [1] or [2], in which the gas atmosphere containing the sulfur element is obtained by supplying a sulfur source to the first melt.
[5] The method for producing a sulfide-based solid electrolyte according to the [1] or [2], in which the gas atmosphere containing the sulfur element is obtained by introducing a sulfur vapor into the furnace.
[6] The method for producing a sulfide-based solid electrolyte according to the [5], in which the sulfur vapor is generated by heating sulfur in the furnace at 200°C to 450°C.
[7] The method for producing a sulfide-based solid electrolyte according to the [1] or [2], in which the second sulfide-based solid electrolyte raw material is continuously supplied to the first melt.
[8] The method for producing a sulfide-based solid electrolyte according to the [1] or [2], in which the second melt is continuously discharged from the furnace to be cooled.
[9] The method for producing a sulfide-based solid electrolyte according to the [1] or [2], in which a heating temperature of the first sulfide-based solid electrolyte raw material or the second sulfide-based solid electrolyte raw material is 600°C or higher and lower than 900°C.
[10] The method for producing a sulfide-based solid electrolyte according to the [1] or [2], in which the second melt is cooled using a twin-roller.
[11] An apparatus for producing a sulfide-based solid electrolyte, the apparatus including:
   a furnace;
   a heating portion configured to heat the furnace;
   a first raw material supply portion configured to supply a first sulfide-based solid electrolyte raw material to the furnace;
   a second raw material supply portion configured to supply a second sulfide-based solid electrolyte raw material to a first melt obtained by heating and melting the first sulfide-based solid electrolyte raw material supplied to the furnace;
   a discharge portion configured to discharge a second melt obtained by supplying the second sulfide-based solid electrolyte raw material to the first melt in the furnace; and
   a cooling portion configured to cool the second melt discharged from the discharge portion.
[12] The apparatus for producing a sulfide-based solid electrolyte according to the [11], the apparatus including a sulfur supply portion configured to supply a sulfur source or a sulfur vapor to the furnace.
[13] The apparatus for producing a sulfide-based solid electrolyte according to the [11] or [12], in which the second raw material supply portion continuously supplies the second sulfide-based solid electrolyte raw material to the first melt.
[14] The apparatus for producing a sulfide-based solid electrolyte according to the [11] or [12], in which the second raw material supply portion quantitatively supplies the second sulfide-based solid electrolyte raw material to the first melt.
[15] The apparatus for producing a sulfide-based solid electrolyte according to the [11] or [12], in which the cooling portion includes a twin-roller.
[16] The apparatus for producing a sulfide-based solid electrolyte according to the [11] or [12], the apparatus including a reheating portion configured to reheat the sulfide-based solid electrolyte obtained by being cooled in the cooling portion.

### ADVANTAGEOUS EFFECTS OF INVENTION

According to the present invention, a second sulfide-based solid electrolyte raw material is supplied to a melt obtained by heating and melting a first sulfide-based solid electrolyte raw material in a furnace, and an obtained mixture is heated and melted under a gas atmosphere containing a sulfur element, so that a temperature of the supplied second sulfide-based solid electrolyte raw material rises rapidly, and the second sulfide-based solid electrolyte raw material can be instantaneously melted while being mixed with the melt. Therefore, it is possible to produce a large amount of sulfide-based solid electrolyte in a short time while preventing volatilization of a raw material.

### BRIEF DESCRIPTION OF DRAWINGS

FIG. 1 is a flowchart of a method for producing a sulfide-based solid electrolyte according to an embodiment of the present invention.
FIG. 2A is a schematic view showing a state in which a first melt 11 having a melt surface 13 is obtained by introducing a first sulfide-based solid electrolyte raw material 12 into a furnace 10 and heating and melting the first sulfide-based solid electrolyte raw material 12. FIG. 2B is a schematic view illustrating a state in which the first melt 11 is present only on a part of a bottom surface of the furnace 10 and the melt surface is not formed in the furnace 10.
FIG. 3 is a schematic view showing a state in which a second melt 21 is obtained by supplying a second sulfide-based solid electrolyte raw material 22 to the first melt formed in the furnace 20 and heating and melting an obtained mixture.
FIG. 4A is a schematic view illustrating an aspect in which a sulfur source 33a is supplied together with a second sulfide-based solid electrolyte raw material 32 to a first melt formed in a furnace 30, and the sulfur source 33a is heated to obtain a sulfur atmosphere. FIG. 4B is a schematic view illustrating an aspect in which the sulfur atmosphere is obtained by introducing a previously obtained sulfur vapor 33b into the furnace 30.
FIG. 5 is a schematic diagram illustrating a flow of discharging a second melt 41 from a discharge portion 44 provided in a furnace 40 and transitioning to a cooling step.
FIG. 6 is a schematic view showing an example of an apparatus for producing a sulfide-based solid electrolyte according to an embodiment of the present invention.

### DESCRIPTION OF EMBODIMENTS

Hereinafter, the present invention is described in detail, but the present invention is not limited to the following embodiments, and can be freely modified and implemented without departing from the gist of the present invention. In addition, "to" indicating a numerical range is used to include numerical values written before and after it as a lower limit value and an upper limit value. In the following drawings, members and portions having the same functions may be denoted by the same reference numerals, and duplicate descriptions may be omitted or simplified. In addition, embodiments described in the drawings are schematically for the purpose of clearly illustrating the present invention, and do not necessarily accurately represent a size or a scale of an actual apparatus.

### [Method for Producing Sulfide-based Solid Electrolyte]

A method for producing a sulfide-based solid electrolyte according to an embodiment of the present invention (hereinafter also referred to as the present production method) includes: heating and melting a first sulfide-based solid electrolyte raw material in a furnace to obtain a first melt; supplying a second sulfide-based solid electrolyte raw material to the first melt; and heating and melting an obtained mixture in a gas atmosphere containing a sulfur element; and cooling an obtained second melt.

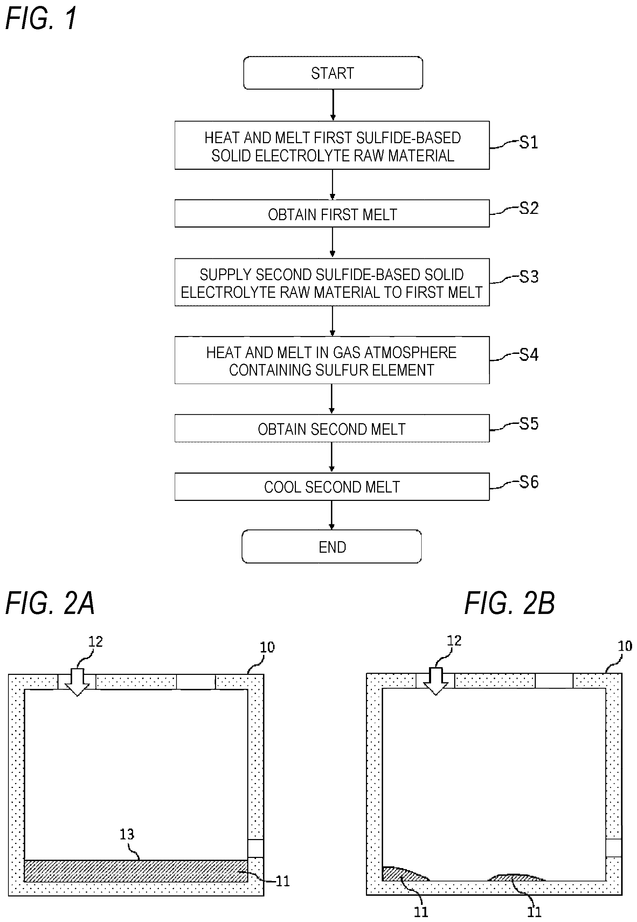

FIG. 1 shows a flowchart of the present production method. In the present production method, first, the first sulfide-based solid electrolyte raw material is heated and melted in the furnace (step S1) to obtain the first melt (step S2).

As the furnace, a known furnace which includes a separate heating portion and is used for heating and melting a solid electrolyte raw material in the related art can be appropriately used, and a material and a size of the furnace can be freely selected.

An amount of the first melt is an amount sufficient to form at least a melt surface within the furnace, and may be small. Here, the melt surface means a liquid surface formed by the melt and covering an entire bottom surface of the furnace, as shown in FIG. 2A, and does not include, for example, a case in which the melt is present only on a part of the bottom surface of the furnace, as shown in FIG. 2B. Once the melt surface is formed in the furnace by the obtained melt, by supplying additional raw material (second sulfide-based solid electrolyte raw material), the raw material instantly melts as a temperature thereof rises rapidly. Therefore, as the raw material is added, the melt can be synthesized continuously, and by going through a subsequent cooling step, the sulfide-based solid electrolyte can be obtained in a short time. Accordingly, even when a large amount of sulfide-based solid electrolyte is to be produced, a production time thereof can be significantly reduced. In addition, since the sulfide-based solid electrolyte can be produced in a short time, volatilization of the raw material in a production process can be prevented.

In the present specification, the "first sulfide-based solid electrolyte raw material" refers to a sulfide-based solid electrolyte raw material that is first supplied into a furnace and heated and melted in order to obtain a melt in an amount sufficient to form at least a melt surface in the furnace, and refers to a raw material that serves as a starter for melt synthesis. Further, the "first melt" refers to a melt obtained by heating and melting the "first sulfide-based solid electrolyte raw material".

The "second sulfide-based solid electrolyte raw material" refers to a sulfide-based solid electrolyte raw material that is further supplied to the first melt. A sulfide-based solid electrolyte raw material further supplied to a melt obtained by supplying a sulfide-based solid electrolyte raw material to the "first melt" is also included in the "second sulfide-based solid electrolyte raw material".

The "second melt" refers to a melt obtained by supplying the "second sulfide-based solid electrolyte raw material" to the "first melt" and heating and melting an obtained mixture. A melt obtained by further supplying the "second sulfide-based solid electrolyte raw material" to the melt, which is obtained by supplying the "second sulfide-based solid electrolyte raw material" to the "first melt" and heating and melting the obtained mixture, and heating and melting an obtained mixture is also included in the "second melt".

### (Sulfide-based Solid Electrolyte Raw Material)

In the present production method, various raw materials can be used as the first sulfide-based solid electrolyte raw material and the second sulfide-based solid electrolyte raw material, and the sulfide-based solid electrolyte obtained using these raw materials may also be various sulfide-based solid electrolytes. The first sulfide-based solid electrolyte raw material and the second sulfide-based solid electrolyte raw material may have the same composition, or may have different compositions. In particular, the composition of the first sulfide-based solid electrolyte raw material is preferably the same as the composition of the second sulfide-based solid electrolyte raw material. Hereinafter, the first sulfide-based solid electrolyte raw material and the second sulfide-based solid electrolyte raw material may be collectively referred to as the "sulfide-based solid electrolyte raw material" or the "present raw material".

As the present raw material, a commercially available sulfide-based solid electrolyte raw material may be used, or a sulfide-based solid electrolyte raw material produced from a material may be used. In addition, these sulfide-based solid electrolyte raw materials may be further subjected to a known pretreatment. That is, the present production method may appropriately include a step of producing the present raw material or a step of subjecting the present raw material to a pretreatment.

The sulfide-based solid electrolyte raw material is specifically described below. The sulfide-based solid electrolyte raw material usually contains an alkali metal element (R) and a sulfur element (S).

Examples of the alkali metal element (R) include lithium element (Li), sodium element (Na), and potassium element (K), and among these elements, the lithium element (Li) is preferable.

As the alkali metal element (R), substances (components) containing an alkali metal element such as elemental alkali metal element and compounds containing an alkali metal element can be appropriately combined and used. Here, as the lithium element, Li-containing substances (components), such as elemental Li and Li-containing compounds, can be appropriately combined and used.

Examples of a substance containing the lithium element (Li) include lithium compounds such as lithium sulfide (Li₂S), lithium iodide (LiI), lithium carbonate (Li₂CO₃), lithium sulfate (Li₂SO₄), lithium oxide (Li₂O), and lithium hydroxide (LiOH), and metallic lithium. As the substance containing the lithium element (Li), from the viewpoint of obtaining a sulfide material, it is preferable to use lithium sulfide.

As the sulfur element (S), S-containing substances (components), such as elemental S and S-containing compounds, can be appropriately combined and used.

Examples of a substance containing the sulfur element (S) include phosphorus sulfides such as phosphorus trisulfide (P₂S₃) and phosphorus pentasulfide (P₂S₅), other sulfur compounds containing phosphorus, elemental sulfur, and a compound containing sulfur. Examples of the compound containing sulfur include H₂S, CS₂, iron sulfides (FeS, Fe₂S₃, FeS₂, Fe₁₋ₓS, or the like), bismuth sulfide (Bi₂S₃), and copper sulfides (CuS, Cu₂S, Cu₁₋ₓS, or the like). From the viewpoint of obtaining a sulfide material, the substance containing the sulfur element (S) is preferably phosphorus sulfide, and more preferably phosphorus pentasulfide (P₂S₅). These substances may be used alone or in combination of two or more kinds thereof. Phosphorus sulfide can be considered as a compound that serves as both the S-containing substance and a P-containing substance, which is described later.

From the viewpoint of improving an ionic conductivity and the like of the obtained sulfide-based solid electrolyte, it is preferable that the present raw material further contains a phosphorus element (P). As the phosphorus element (P), P-containing substances (components), such as elemental P and P-containing compounds, can be appropriately combined and used.

Examples of a substance containing the phosphorus element (P) include phosphorus sulfides such as phosphorus trisulfide (P₂S₃) and phosphorus pentasulfide (P₂S₅), phosphorus compounds such as sodium phosphate (Na₃PO₄), and elemental phosphorus. As the substance containing the phosphorus element (P), from the viewpoint of exerting the effect of the present invention more effectively, phosphorus sulfide having high volatility is preferable, and phosphorus pentasulfide (P₂S₅) is more preferable. These substances may be used alone or in combination of two or more kinds thereof.

The present raw material may be obtained as a mixed raw material by, for example, appropriately mixing the above-mentioned substances according to a composition of the desired sulfide-based solid electrolyte. A mixing ratio is not particularly limited, but for example, a molar ratio S/R of the sulfur element (S) to the alkali metal element (R) in the raw material is preferably 0.65/0.35 or less, and more preferably 0.5/0.5 or less, from the viewpoint of improving the ionic conductivity and the like of the obtained sulfide-based solid electrolyte. The mixed raw material is preferably obtained by mixing the raw materials in a predetermined stoichiometric mixture ratio according to the materials used for the mixing. Examples of a mixing method include mixing in a mortar, mixing using a medium such as a planetary ball mill, and medium-less mixing such as a pin mill, a powder stirrer, and air flow mixing.

Examples of a preferred combination of the alkali metal element and the sulfur element contained in the present raw material include a combination of Li₂S and P₂S₅. When Li₂S and P₂S₅ are combined, a molar ratio Li/P of Li to P is preferably from 40/60 to 88/12, and more preferably from 50/50 to 88/12. By adjusting the mixing ratio so that the amount of P₂S₅ is relatively smaller than Li₂S, it becomes easier to prevent volatilization of sulfur and phosphorus components during heating treatment due to a smaller boiling point of P₂S₅ compared to a melting point of Li₂S.

On the other hand, since lithium sulfide is expensive, a lithium compound other than lithium sulfide, metallic lithium, or the like may be used from the viewpoint of reducing a production cost of the sulfide-based solid electrolyte. Specifically, in this case, the raw material preferably contains one or more selected from the group consisting of metallic lithium, lithium iodide (LiI), lithium carbonate (Li₂CO₃), lithium sulfate (Li₂SO₄), lithium oxide (Li₂O), and lithium hydroxide (LiOH) as the Li-containing substance. These substances may be used alone or in combination of two or more kinds thereof.

The present raw material may contain further substances (compounds and the like) in addition to the above substances depending on the composition of the desired sulfide-based solid electrolyte or as additives or the like.

For example, when producing a sulfide-based solid electrolyte containing a halogen element such as F, Cl, Br or I, the raw material preferably contains a halogen element (Ha). In this case, the raw material preferably contains a compound containing a halogen element. Examples of the compound containing a halogen element include lithium halides such as lithium fluoride (LiF), lithium chloride (LiCl), lithium bromide (LiBr), and lithium iodide (LiI), phosphorus halides, phosphoryl halides, sulfur halides, sodium halides, and boron halides. As the compound containing a halogen element, lithium halides are preferable, and LiCl, LiBr, and LiI are more preferable, from the viewpoint of reactivity of the raw material. These compounds may be used alone or in combination of two or more kinds thereof.

An alkali metal halide such as lithium halide is also a compound containing an alkali metal element such as Li. When the raw material contains an alkali metal halide, a part or all of the alkali metal element such as Li in the raw material may be derived from the alkali metal halide such as lithium halide.

When the raw material contains the halogen element (Ha) and the phosphorus element (P), a molar equivalent of Ha relative to P in the raw material is preferably 0.2 molar equivalents or more, and more preferably 0.5 molar equivalents or more, from the viewpoint of improving the ionic conductivity and the like of the obtained sulfide-based solid electrolyte. From the viewpoint of stability of the obtained sulfide-based solid electrolyte, the molar equivalent of Ha is preferably 4 molar equivalents or less, and more preferably 3 molar equivalents or less.

The obtained sulfide-based solid electrolyte may be an amorphous sulfide-based solid electrolyte depending on a purpose, and from the viewpoint of improving ease of generation of an amorphous phase, it is also preferable that the raw material contains sulfides such as SiS₂, B₂S₃, GeS₂, and Al₂S₃. By facilitating the generation of the amorphous phase, when the amorphous substance is obtained by rapid cooling, the amorphous sulfide-based solid electrolyte can be obtained even when a cooling rate is reduced, thereby reducing a load on an apparatus.

From the viewpoint of imparting moisture resistance to the sulfide-based solid electrolyte, it is also preferable that oxides such as SiO₂, B₂O₃, GeO₂, Al₂O₃, P₂O₅ are contained. These compounds may be used alone or in combination of two or more kinds thereof.

The sulfides and oxides may be contained in the present raw material, or may be added separately when the present raw material is heated and melted. An addition amount of the sulfides and oxides is preferably 0.1 weight% or more, and more preferably 0.5 weight% or more with respect to a total amount of the raw material. Further, the addition amount of the sulfides or oxides is preferably 50 weight% or less, and more preferably 40 weight% or less.

The raw material may also contain a compound that serves as a crystal nucleus, which is described later.

Since the present production method can prevent volatilization of the raw material as described above, the present production method is particularly preferably used when the present raw material contains a highly volatile compound. Examples of a highly volatile compound include LiI, B₂S₃, S, Se, Sb₂S₃, and P₂S₅.

### (Heating and Melting)

In the present production method, as shown in FIG. 2A, first, a first sulfide-based solid electrolyte raw material 12 introduced into a furnace 10 is heated and melted to obtain a first melt 11. As is described later, the furnace 10 is heated by a separate heating portion (not shown) to a temperature at which the first sulfide-based solid electrolyte raw material 12 is melted.

The first melt 11 obtained by the above heating and melting is preferably in an amount sufficient to form at least a melt surface 13 in the furnace 10 as shown in FIG. 2A. As described above, once the melt surface 13 is formed in the furnace 10 by the first melt 11, by supplying additional raw material (second sulfide-based solid electrolyte raw material), a temperature of the supplied additional raw material rises rapidly and the additional raw material melts instantaneously, so that the melts can be synthesized one after another. On the other hand, as shown in FIG. 2B, when a melt surface is not formed in the furnace 10, such as when the first melt 11 is present only on a part of a bottom surface of the furnace 10, the first melt 11 and the second sulfide-based solid electrolyte raw material to be described later may not be mixed sufficiently, and the sulfide-based solid electrolyte may not be efficiently synthesized.

From the above viewpoint, a ratio (mass ratio) of the raw material (second sulfide-based solid electrolyte raw material), which is initially added to the first melt, to the first melt 11 may be, for example, 2 or more, 5 or more, or 10 or more.

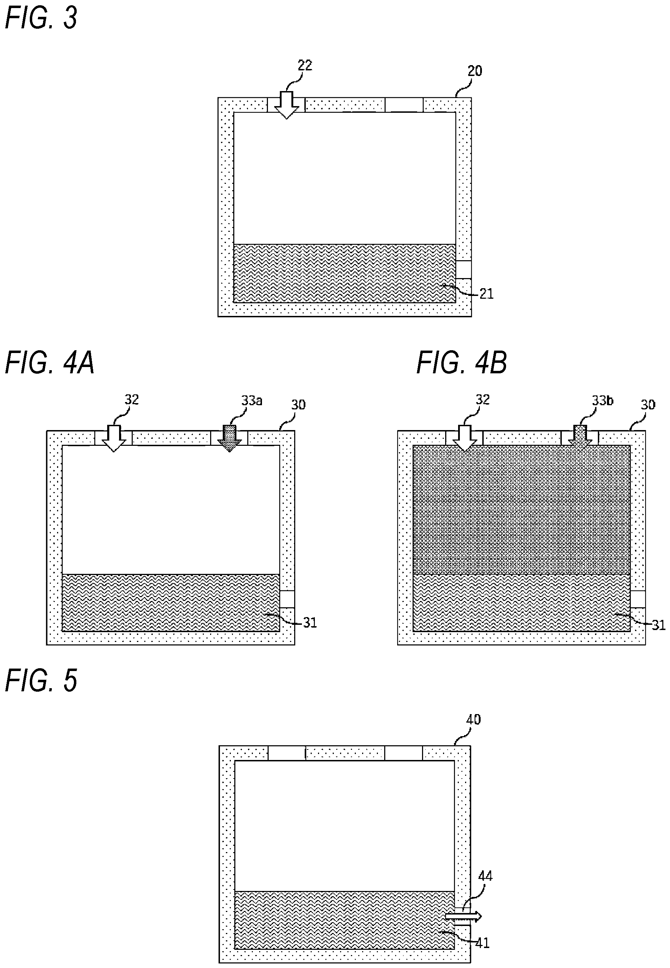

Subsequently, as shown in FIGS. 1 and 3, a second sulfide-based solid electrolyte raw material 22 is supplied to the first melt obtained above (step S3), and heated and melted in a gas atmosphere containing a sulfur element (step S4). As described later, the first melt is usually heated and melted to 600°C to 1000°C, so that by further supplying the second sulfide-based solid electrolyte raw material 22 to the first melt, a temperature of the supplied second sulfide-based solid electrolyte raw material 22 increases rapidly and the second sulfide-based solid electrolyte raw material 22 is mixed with the first melt to obtain a second melt 21 (step S5).

In the present production method, the first sulfide-based solid electrolyte raw material 12 is heated and melted to obtain the first melt 11, and then the second sulfide-based solid electrolyte raw material 22 is continuously supplied, thereby obtaining the second melt 21 without going through an intermediate. Here, the intermediate refers to a compound that is produced by reacting with a raw material and has a different chemical bond from the raw material, and also has a different chemical bond state from a target electrolyte. For example, compounds containing Li, P and S, such as Li₄P₂S₆ and Li₃PS₄, which are obtained by heat-treating a raw material containing a lithium element, a sulfur element and a phosphorus element, can be mentioned. According to the present production method, a step can be simplified without requiring the above-mentioned preliminary step for producing an intermediate. In addition, since a large amount of sulfide-based solid electrolyte can be produced in a short time, it is not necessary to control a composition through an intermediate.

As described above, the present production method is based on the discovery that the temperature of the second sulfide-based solid electrolyte raw material supplied to the first melt rises rapidly, and the second sulfide-based solid electrolyte raw material melts instantaneously while mixing with the melt. Therefore, it is preferable to adjust a charging rate of the second sulfide-based solid electrolyte raw material with respect to an amount of the first melt. The rate at which the second sulfide-based solid electrolyte raw material 22 is supplied to the first melt is preferably adjusted such that the second sulfide-based solid electrolyte raw material 22 is supplied at 5 mass%/min or less relative to 100 mass% of the first melt. The rate is more preferably adjusted to 3.5 mass%/min or less, and may be 0.01 mass%/min or more, or 0.05 mass%/min or more.

The second sulfide-based solid electrolyte raw material 22 may be supplied to the first melt continuously or intermittently. Among them, it is preferable that the second sulfide-based solid electrolyte raw material 22 is continuously supplied to the first melt. When the second sulfide-based solid electrolyte raw material 22 is continuously supplied, the supplied raw material is melted instantaneously, so that the melts can be synthesized one after another continuously, and the process can be transferred to a subsequent cooling step, and thus a large amount of sulfide-based solid electrolyte can be synthesized efficiently in a short time.

When the second sulfide-based solid electrolyte raw material 22 is continuously supplied to the first melt, it is preferable to quantitatively supply the second sulfide-based solid electrolyte raw material 22. A method for the above-mentioned quantitative supply is not particularly limited, but examples thereof include methods using a screw feeder, a table feeder, and gas flow conveyance.

The second sulfide-based solid electrolyte raw material 22 is preferably mixed and stirred before being supplied to the first melt. Accordingly, a synthesis reaction proceeds more smoothly the moment the second sulfide-based solid electrolyte raw material 22 is mixed with the melt, so that more efficient melting can be achieved. A method for mixing and stirring the second sulfide-based solid electrolyte raw material 22 is not particularly limited, and any known method in the related art can be used.

The second sulfide-based solid electrolyte raw material is supplied to the first melt and heated and melted in the gas atmosphere containing the sulfur element. By heating and melting the present raw material in the gas atmosphere containing the sulfur element, sulfur is introduced into the first melt, making it possible to prevent a change in sulfur composition caused by volatilization. Alternatively, after the second sulfide-based solid electrolyte raw material is supplied to the first melt and heated and melted to obtain the second melt, heating and melting of the second melt may be continued in the gas atmosphere containing the sulfur element. Accordingly, since sulfur that is lost due to the volatilization during the heating and melting is replenished, the change in sulfur composition in the obtained sulfide-based solid electrolyte can be prevented.

Examples of the gas containing the sulfur element include a gas containing a compound containing the sulfur element or elemental sulfur, such as a sulfur gas, hydrogen sulfide gas, and carbon disulfide gas.

The gas atmosphere containing the sulfur element may be obtained by supplying a sulfur source 33a to the first melt and heating the sulfur source 33a to generate a gas containing a sulfur element, as shown in FIG. 4A. In this case, the sulfur source 33a is not particularly limited as long as the sulfur source 33a is elemental sulfur or a sulfur compound from which the gas containing the sulfur element can be obtained by heating, and examples thereof include elemental sulfur, organic sulfur compounds such as hydrogen sulfide and carbon disulfide, iron sulfides (such as FeS, Fe₂S₃, FeS₂, and Fe₁₋ₓS), bismuth sulfide (Bi₂S₃), copper sulfides (such as CuS, Cu₂S, and Cu₁₋ₓS), polysulfides such as lithium polysulfide and sodium polysulfide, polysulfides, and rubber subjected to a sulfur vulcanization treatment. The sulfur source 33a is preferably a sulfur powder.

As another method, the gas atmosphere containing the sulfur element may be obtained by introducing a previously obtained sulfur vapor 33b into a furnace 30, as shown in FIG. 4B. For example, sulfur is heated at 200°C to 450°C to generate the sulfur vapor 33b, and an inert gas such as a N₂ gas, an argon gas, or a helium gas is transported into the furnace as a carrier gas to obtain the gas atmosphere containing the sulfur element.

As another method, the gas atmosphere containing the sulfur element may be obtained by incorporating a sulfur source in at least one of the first sulfide-based solid electrolyte raw material and the second sulfide-based solid electrolyte raw material. Accordingly, when the present raw material is heated and melted, the sulfur source is also heated, so that the present raw material can be heated and melted in the generated gas atmosphere containing the sulfur element.

In the present production method, any one of the methods may be used for obtaining the above-described gas atmosphere containing the sulfur element, or a plurality of methods may be used in combination.

A temperature for heating and melting is not particularly limited in either the step of obtaining the first melt or the step of obtaining the second melt, and from the viewpoint of homogenizing the melt in a short time, the temperature is preferably 600°C or higher, more preferably 630°C or higher, and still more preferably 650°C or higher. Further, the temperature for heating and melting is preferably 1,000°C or lower, more preferably 950°C or lower, still more preferably lower than 900°C, and particularly preferably lower than 800°C, from the viewpoint of preventing deterioration or decomposition due to heating of components in the melt. Further, the temperature is preferably 600°C or higher and lower than 900°C.

In a stage of obtaining the first melt, heating to the above-mentioned temperature may be performed by a heating portion provided in the furnace, but thereafter, in a stage of obtaining the second melt, it is sufficient to compensate for heat energy that is lost by a temperature decrease due to the supply of the additional raw material. For example, the above temperature may be maintained by maintaining an internal temperature with a heater or the like.

A time for heating and melting to obtain the first melt is not particularly limited as long as the above-mentioned melt surface is obtained, and may be, for example, 0.5 hours or more, 1 hour or more, or 2 hours or more.

The time for heating and melting to obtain the second melt can be appropriately adjusted according to the size of the furnace and is not particularly limited, and from the viewpoint of homogeneity, the time is preferably 0.5 hours or more, more preferably 1 hour or more, and still more preferably 2 hours or more. As long as the deterioration and decomposition of the components in the melt caused by the heating is tolerable, the time for heating and melting may be long. As a practical range, the time is preferably 100 hours or less, more preferably 50 hours or less, and still more preferably 25 hours or less.

In either the process of obtaining the first melt or the process of obtaining the second melt, a pressure during the heating and melting is not particularly limited, and for example, normal pressure or slight pressure is preferable, and normal pressure is more preferable.

From the viewpoint of preventing side reactions with water vapor, oxygen, and the like during the heating and melting, a dew point in the furnace is preferably -20°C or lower. A lower limit is not particularly limited, and is generally -80°C or more. Further, an oxygen concentration is preferably 1,000 ppm by volume or less.

When the second sulfide-based solid electrolyte raw material is supplied to the first melt, the first melt is preferably mixed and stirred. Accordingly, since the second sulfide-based solid electrolyte raw material 22 is more effectively mixed with the melt, more instantaneous melting can be achieved. The first melt may be mixed and stirred before or after the second sulfide-based solid electrolyte raw material is supplied. A method for mixing and stirring the first melt is not particularly limited, and any known method in the related art can be used.

### (Cooling)

The present production method includes a step of cooling the second melt obtained by heating and melting the above-mentioned present raw material (step S6). Accordingly, a solid sulfide-based solid electrolyte is obtained. For example, as shown in FIG. 5, a second melt 41 is discharged from a discharge portion 44 provided in a furnace 40 at any timing, and the process proceeds to a cooling step of the second melt 41. The second melt 41 may be cooled by any known method, and a method thereof is not particularly limited. In order to increase a cooling rate, it is preferable to use a twin-roller, which is generally considered to have the fastest rapid-cool-rate.

The cooling rate is preferably 0.01°C/sec or more, more preferably 0.05°C/sec or more, and still more preferably 0.1°C/sec or more, from the viewpoint of maintaining the composition obtained by the heating and melting. Further, an upper limit value of the cooling rate is not particularly limited, and a cooling rate of the twin-roller is, for example, 1,000,000°C/sec or less.

In the case where the obtained solid is desired to be an amorphous sulfide-based solid electrolyte, it is preferable to rapidly cool the second melt obtained by the heating and melting. The cooling rate in the case of rapid cooling is preferably 10°C/sec or more, more preferably 100°C/sec or more, still more preferably 500°C/sec or more, and particularly preferably 700°C/sec or more. Further, an upper limit value of the cooling rate is not particularly limited, and the cooling rate of the twin-roller is, for example, 1,000,000°C/sec or less.

On the other hand, it is also possible to obtain a sulfide-based solid electrolyte having a specific crystal structure or a sulfide-based solid electrolyte constituted by a crystal phase and an amorphous phase by performing a slow cooling in the cooling step to crystallize at least a part of the solid. The cooling rate in the case of the slow cooling is preferably 0.01°C/sec or more, and more preferably 0.05°C/sec or more. The cooling rate is preferably 500°C/sec or less, and more preferably 450°C/sec or less. The cooling rate may be 10°C/sec or less, or may be 5°C/sec or less. The cooling rate may be appropriately adjusted according to crystallization conditions.

Here, a crystal of the sulfide-based solid electrolyte is preferably an ion-conductive crystal. Specifically, the ion-conductive crystal is a crystal having a lithium-ion conductivity of more than 10⁻⁴ S/cm, and more preferably more than 10⁻³ S/cm.

When it is desired that the solid obtained after the cooling is a sulfide-based solid electrolyte containing a crystal phase, it is preferable that the melt obtained in the heating and melting step contains a compound that serves as a crystal nucleus. In this way, it is easier for crystals to precipitate in the cooling step. The method for containing the compound that serves as the crystal nucleus in the melt is not particularly limited, but examples thereof include a method of adding a compound that serves as a crystal nucleus to the raw material or an intermediate, and a method of adding a compound that serves as a crystal nucleus to the melt during heating and melting.

Examples of the compound that serves as the crystal nucleus include oxides, oxynitrides, nitrides, carbides, other chalcogen compounds, and halides. The compound that serves as the crystal nucleus is preferably a compound having a certain degree of compatibility with the melt. A compound that is completely incompatible with the melt cannot serve as a crystal nucleus.

When it is desired that the solid obtained after cooling is a sulfide-based solid electrolyte containing a crystal phase, a content of the compound that serves as the crystal nucleus in the melt is preferably 0.01 mass% or more, more preferably 0.1 mass% or more, and still more preferably 1 mass% or more. On the other hand, from the viewpoint of preventing a decrease in the lithium-ion conductivity, the content of the compound that serves as the crystal nucleus in the melt is preferably 20 mass% or less, and more preferably 10 mass% or less.

If it is desired that the solid obtained after cooling is an amorphous sulfide-based solid electrolyte, it is preferable that the melt does not contain any compound that serves as a crystal nucleus, or that a content of such compound is a predetermined amount or less. Specifically, the content of the compound that serves as the crystal nucleus in the melt is preferably 1 mass% or less, and more preferably 0.1 mass% or less. The content of the compound that serves as the crystal nucleus in the melt may be 0.01 mass% or less.

The cooling is preferably performed under normal pressure. The normal pressure means that the pressure is not controlled during cooling. Specifically, the pressure is about 0.8 atm to 1.2 atm.

### (Reheating)

When the solid obtained in the cooling step is an amorphous sulfide-based solid electrolyte or a sulfide-based solid electrolyte containing an amorphous phase, the present production method may further include reheating the solid. By reheating a sulfide-based solid electrolyte containing sulfide-based solid electrolyte crystals, ions in the crystal structure can be re-arranged, thereby increasing the lithium-ion conductivity.

The reheating treatment refers to at least one of heating the solid obtained by cooling for crystallization and re-arranging ions in the crystal structure. Here, the heat treatment of these amorphous sulfide-based solid electrolytes or sulfide-based solid electrolytes containing an amorphous phase, including the crystallization treatment, is referred to as the reheating treatment.

### (Continuous Process)

In the present production method, the heating and melting step and the cooling step are preferably carried out as a continuous process. That is, it is preferable to continuously supply the second sulfide-based solid electrolyte raw material to the first melt obtained in the furnace, while continuously discharging the second melt produced over time, and then to move to the cooling step, thereby continuously producing the sulfide-based solid electrolyte. Accordingly, a series of processes, including charging the raw materials and discharging and cooling the melt, can be carried out continuously, making it possible to produce a large amount of sulfide-based solid electrolytes more efficiently in a short time. Specifically, it is preferable to continuously carry out a series of steps including a step of heating and melting the first sulfide-based solid electrolyte raw material in the furnace to obtain the first melt, a step of supplying the second sulfide-based solid electrolyte raw material to the first melt, and heating and melting an obtained mixture in the gas atmosphere containing the sulfur element to obtain the second melt, and a step of discharging the second melt from the furnace and cooling the second melt.

### (Sulfide-based Solid Electrolyte)

Examples of the sulfide-based solid electrolyte obtained by the present production method include a sulfide-based solid electrolyte containing the lithium element, for example, a sulfide-based solid electrolyte having an LGPS crystal structure such as Li₁₀GeP₂S₁₂, a sulfide-based solid electrolyte having an argyrodite crystal structure such as Li₆PS₅Cl, Li_{5.4}PS_{4.4}Cl_{1.6}, and Li_{5.4}PS_{4.4}Cl_{0.8}Br_{0.8}, Li-P-S-Ha-based (Ha represents at least one element selected from the halogen elements) crystallized glass; and LPS crystallized glass such as Li₇P₃S₁₁.

Depending on the purpose, the sulfide-based solid electrolyte may be an amorphous sulfide-based solid electrolyte, a sulfide-based solid electrolyte having a specific crystal structure, or a sulfide-based solid electrolyte including a crystal phase and an amorphous phase. The crystal phase is more preferably an argyrodite crystal phase from the viewpoint of lithium-ion conductivity.

As a sulfide-based solid electrolyte having excellent lithium-ion conductivity, a sulfide-based solid electrolyte having elements of Li-P-S-Ha is preferable, and it is more preferable that the sulfide-based solid electrolyte has a crystal phase. In the halogen element, the halogen element is preferably derived from one or more selected from the group consisting of lithium chloride, lithium bromide, and lithium iodide.

The lithium-ion conductivity of the sulfide-based solid electrolyte is preferably 1.0 × 10⁻⁴ S/cm or more, more preferably 5.0 × 10⁻⁴ S/cm pr more, still more preferably 1.0 × 10⁻³ S/cm or more, and particularly preferably 5.0 × 10⁻³ S/cm or more from the viewpoint of improving the battery characteristics when used in a lithium-ion secondary battery.

The lithium-ion conductivity is measured using an AC impedance measuring device (for example, potentiostat/galvanostat VSP, manufactured by Bio-Logic Sciences Instruments) under the following measurement conditions: measurement frequency: 100 Hz to 1 MHz, measurement voltage: 100 mV, measurement temperature: 25°C.

The obtained sulfide-based solid electrolyte can be identified by analyzing the crystal structure by X-ray diffraction (XRD) measurement, and analyzing the elemental composition using various methods such as ICP emission spectrometry, atomic absorption spectrometry, and ion chromatography. For example, P and S can be measured by ICP emission spectrometry, Li can be measured by atomic absorption spectrometry, and Ha can be measured by ion chromatography.

By performing the Raman spectrum measurement, homogeneity of the composition of the sulfide-based solid electrolyte can be evaluated. Specifically, samples obtained from the obtained sulfide-based solid electrolyte is subjected to the Raman spectrum measurement at any two or more points. From the viewpoint of improving accuracy of the evaluation, the number of measurement points is preferably 8 or more, and more preferably 10 or more.

Preferable conditions for the Raman spectrum measurement when evaluating the homogeneity of the composition of a sulfide-based solid electrolyte include a spot diameter of 3 µm and the number of 10 of the measurement points. By setting the spot diameter to 3 µm, an analysis area in the Raman spectrum measurement becomes a size suitable for evaluating the homogeneity of the composition of the sulfide-based solid electrolyte at a micro level.

It is believed that the smaller the variation in the peak wavenumber (peak position) resulting from the structure of the sulfide-based solid electrolyte is, such as PS₄³⁻ in each measurement result, the more homogeneous the composition of the sulfide-based solid electrolyte is. Alternatively, it is believed that the smaller the variation in the full width at half maximum of the peaks resulting from the structure of the sulfide-based solid electrolyte is, the more homogeneous the composition of the sulfide-based solid electrolyte is.

It is preferable to confirm peaks derived from a P-S bond as the peaks derived from the structure of the sulfide-based solid electrolyte although it depends on the composition of the obtained sulfide-based solid electrolyte.

The position of the peak derived from the P-S bond varies depending on the composition system, but typically, the position is between 350 cm⁻¹ and 500 cm⁻¹. Hereinafter, in the present specification, the variation in peak position and the variation in full width at half maximum of the peak refer to those confirmed for the most intense peak among the peaks derived from the P-S bond.

The variation in peak position can be evaluated as follows. That is, when a standard deviation of the peak positions for each measurement point obtained by the Raman spectrum measurement is calculated and the variation in peak position is expressed as (peak position average value) ± (standard deviation), the standard deviation value is preferably within 2 cm⁻¹, more preferably within 1 cm⁻¹, and still more preferably within 0.5 cm⁻¹. Here, the peak position refers to a position of a peak top.

For example, when the sulfide-based solid electrolyte obtained by the present production method was subjected to the Raman spectrum measurement with a spot diameter of 3 µm and 10 measurement points, the standard deviation of the peak positions of the peaks derived from the P-S bond in a range of 350 cm⁻¹ to 500 cm⁻¹ for each measurement point is preferably within 2 cm⁻¹, more preferably within 1 cm⁻¹, and still more preferably within 0.5 cm⁻¹.

The variation in full width at half maximum of the peaks can be evaluated as follows. That is, the standard deviation of the full width at half maximum of the peaks for each measurement point obtained by the Raman spectrum measurement is calculated by determining the full width at half maximum of each peak and then calculating a standard deviation of the values. When the variation in full width at half maximum is expressed as (average value of full width at half maximum of peaks) ± (standard deviation), the standard deviation value is preferably within 2 cm⁻¹, and more preferably within 1.5 cm⁻¹. The full width at half maximum of the peaks herein refers to a width at which half the peak intensity of the peaks derived from the P-S bond intersects with the peaks derived from the P-S bond when the Raman spectrum is plotted.

For example, when the sulfide-based solid electrolyte obtained by the present production method was subjected to the Raman spectrum measurement with a spot diameter of 3 µm and 10 measurement points, the standard deviation in full width at half maximum of the peaks derived from the P-S bond in a range of 350 cm⁻¹ to 500 cm⁻¹ for each measurement point is preferably within 2 cm⁻¹, and more preferably within 1.5 cm⁻¹.

### (Apparatus for Producing Sulfide-based Solid Electrolyte)

An apparatus for producing a sulfide-based solid electrolyte according to an embodiment of the present invention (hereinafter, also referred to as the present production apparatus) includes: a furnace; a heating portion configured to heat the furnace; a first raw material supply portion configured to supply a first sulfide-based solid electrolyte raw material to the furnace; a second raw material supply portion configured to supply a second sulfide-based solid electrolyte raw material to a first melt obtained by heating and melting the first sulfide-based solid electrolyte raw material supplied to the furnace; a discharge portion configured to discharge a second melt obtained by supplying the second sulfide-based solid electrolyte raw material to the first melt in the furnace; and a cooling portion configured to cool the second melt discharged from the discharge portion.

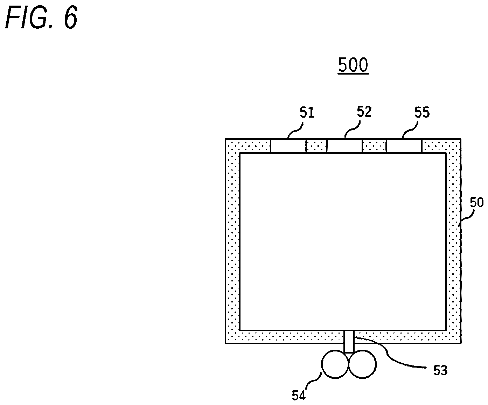

The present production apparatus can be used for performing the present production method described above, and the contents described in the section [Method for Producing Sulfide-based Solid Electrolyte] can be directly applied thereto. FIG. 6 is a schematic diagram showing an example of the present production apparatus.

The heating portion (not shown) that heats a furnace 50 in a present production apparatus 500 is provided for performing the heating and melting described in the section [Method for Producing Sulfide-based Solid Electrolyte], and an aspect thereof is not particularly limited.

A first raw material supply portion 51 in the present production apparatus 500 is provided for supplying the first sulfide-based solid electrolyte raw material to the furnace 50 described in the section [Method for Producing Sulfide-based Solid Electrolyte], and an aspect thereof is not particularly limited.

A second raw material supply portion 52 in the present production apparatus 500 is provided for supplying the second sulfide-based solid electrolyte raw material to the first melt obtained by heating and melting the first sulfide-based solid electrolyte raw material supplied to the furnace 50, and an aspect thereof is not particularly limited.

Further, the second raw material supply portion 52 may be one that continuously supplies the second sulfide-based solid electrolyte raw material to the first melt, or may be one that quantitatively supplies the second sulfide-based solid electrolyte raw material to the first melt, or may be both.

In FIG. 6, the first raw material supply portion 51 and the second raw material supply portion 52 are shown as an example in which different supply ports are used, but the present embodiment is not limited to this, and the same supply port provided in the present production apparatus 500 may be used.

A discharge portion 53 in the present production apparatus 500 is provided for discharging the second melt obtained by supplying the second sulfide-based solid electrolyte raw material to the first melt in the furnace 50, and an aspect thereof is not particularly limited.

A cooling portion 54 in the present production apparatus 500 is provided in order to cool the second melt discharged from the discharge portion 53, and an aspect thereof is not particularly limited.

Further, as shown in FIG. 6, the cooling portion 54 may include a twin-roller as described in the section [Method for Producing Sulfide-based Solid Electrolyte].

The present production apparatus 500 may include a sulfur supply portion 55 that supplies the sulfur source or the sulfur vapor described in the section [Method for Producing Sulfide-based Solid Electrolyte], and an aspect thereof is not particularly limited.

In FIG. 6, the sulfur supply portion 55, the first raw material supply portion 51, and the second raw material supply portion 52 are shown as an example in which different supply ports are used, but the present embodiment is not limited to this, and the same supply port provided in the present production apparatus 500 may be used.

As described in the section [Method for Producing Sulfide-based Solid Electrolyte], the present production apparatus 500 may include a reheating portion (not shown) that reheats the sulfide-based solid electrolyte obtained by cooling in the cooling portion 54, and an aspect thereof is not particularly limited.

The present invention is not limited to the above-described embodiments, and various modifications can be adopted within the scope of the present invention. For example, the present invention is not limited to the above-described embodiments, and may be modified and improved as appropriate. In addition, the material, shape, size, number, arrangement place, and the like of each component in the above-described embodiments are optional as long as the present invention can be achieved, and are not limited.

As described above, the following matters are disclosed in the present description.
[1] A method for producing a sulfide-based solid electrolyte, the method including:
   heating and melting a first sulfide-based solid electrolyte raw material in a furnace to obtain a first melt;
   supplying a second sulfide-based solid electrolyte raw material to the first melt;
   heating and melting an obtained mixture in a gas atmosphere containing a sulfur element; and
   cooling an obtained second melt.
[2] The method for producing a sulfide-based solid electrolyte according to the [1], in which the second sulfide-based solid electrolyte raw material is supplied at a rate of 5 mass%/min or less with respect to 100 mass% of the first melt.
[3] The method for producing a sulfide-based solid electrolyte according to the [1] or [2], in which a composition of the first sulfide-based solid electrolyte raw material is the same as a composition of the second sulfide-based solid electrolyte raw material.
[4] The method for producing a sulfide-based solid electrolyte according to any one of the [1] to [3], in which the gas atmosphere containing the sulfur element is obtained by supplying a sulfur source to the first melt.
[5] The method for producing a sulfide-based solid electrolyte according to any one of the [1] to [4], in which the gas atmosphere containing the sulfur element is obtained by introducing a sulfur vapor into the furnace.
[6] The method for producing a sulfide-based solid electrolyte according to the [5], in which the sulfur vapor is generated by heating sulfur in the furnace at 200°C to 450°C.
[7] The method for producing a sulfide-based solid electrolyte according to any one of the [1] to [6], in which the second sulfide-based solid electrolyte raw material is continuously supplied to the first melt.
[8] The method for producing a sulfide-based solid electrolyte according to any one of the [1] to [7], in which the second melt is continuously discharged from the furnace to be cooled.
[9] The method for producing a sulfide-based solid electrolyte according to any one of the [1] to [8], in which a heating temperature of the first sulfide-based solid electrolyte raw material or the second sulfide-based solid electrolyte raw material is 600°C or higher and lower than 900°C.
[10] The method for producing a sulfide-based solid electrolyte according to any one of the [1] to [9], in which the second melt is cooled using a twin-roller.
[11] An apparatus for producing a sulfide-based solid electrolyte, the apparatus including:
   a furnace;
   a heating portion configured to heat the furnace;
   a first raw material supply portion configured to supply a first sulfide-based solid electrolyte raw material to the furnace;
   a second raw material supply portion configured to supply a second sulfide-based solid electrolyte raw material to a first melt obtained by heating and melting the first sulfide-based solid electrolyte raw material supplied to the furnace;
   a discharge portion configured to discharge a second melt obtained by supplying the second sulfide-based solid electrolyte raw material to the first melt in the furnace; and
   a cooling portion configured to cool the second melt discharged from the discharge portion.
[12] The apparatus for producing a sulfide-based solid electrolyte according to the [11], the apparatus including a sulfur supply portion configured to supply a sulfur source or a sulfur vapor to the furnace.
[13] The apparatus for producing a sulfide-based solid electrolyte according to the [11] or [12], in which the second raw material supply portion continuously supplies the second sulfide-based solid electrolyte raw material to the first melt.
[14] The apparatus for producing a sulfide-based solid electrolyte according to any one of the [11] to [13], in which the second raw material supply portion quantitatively supplies the second sulfide-based solid electrolyte raw material to the first melt.
[15] The apparatus for producing a sulfide-based solid electrolyte according to any one of the [11] to [14], in which the cooling portion includes a twin-roller.
[16] The apparatus for producing a sulfide-based solid electrolyte according to any one of the [11] to [15], the apparatus including a reheating portion configured to reheat the sulfide-based solid electrolyte obtained by being cooled in the cooling portion.

### EXAMPLES

Hereinafter, the present invention is described in detail with reference to Examples, but the present invention is not limited thereto. Examples 1 and 2 are inventive examples of the present production method, and Examples 3 and 4 are comparative examples.

### (Lithium-ion Conductivity Evaluation)

A powder obtained in each example was further pulverized in a mortar and passed through a 100 µm mesh to obtain a sulfide-based solid electrolyte powder having a D50 of 10 µm based on a volume-based particle size distribution, the powder was formed into a powder body under a pressure of 380 MPa, the powder body was used as a measurement sample, and the lithium-ion conductivity was measured using an AC impedance measuring apparatus (potentiostat/galvanostat VSP, manufactured by Bio-Logic Sciences Instruments) and evaluated according to the following criteria.

The measurement conditions were as follows: a measurement frequency of 100 Hz to 1 MHz, a measurement voltage of 100 mV, and a measurement temperature of 25°C.

### (Battery Performance Evaluation)

The powder obtained in each example was further pulverized in a mortar and passed through a 100 µm mesh to obtain a sulfide-based solid electrolyte powder having a D50 of 10 µm based on the volume-based particle size distribution, and battery performance was evaluated when the powder was used in an all-solid-state lithium-ion secondary battery. First, a positive electrode mixture and an all-solid-state lithium-ion secondary battery were produced by the following method, and a charge and discharge test was performed. Results of the charge and discharge test were evaluated according to the following evaluation criteria.

### [Preparation of Positive Electrode Mixture]

A layered rock-salt LiCoO₂ powder (volume average particle diameter: 10 µm) coated with LiNbO₃ was used as a positive electrode active material, and 35 parts of the sulfide-based solid electrolyte powder obtained by the method of each example, 60 parts of the positive electrode active material, and 5 parts of a conductive aid (acetylene black, manufactured by Denka Company Limited, HS 100) were mixed to prepare a positive electrode mixture. A thickness of the LiNbO₃ coat was 7 nm by TEM observation.

### [Preparation of All-Solid-State Lithium-Ion Secondary Battery]

The sulfide-based solid electrolyte powder (80 mg) obtained by the method of each example was charged into a plastic cylinder having a diameter of 10 mm and pressure-molded to form a solid electrolyte layer. Next, 10 mg of the positive electrode mixture prepared above was charged into the same cylinder and pressure-molded again to form a positive electrode layer. Further, an indium foil and a lithium foil were charged from a side opposite to the positive electrode mixture to form a negative electrode layer. An all-solid-state lithium-ion secondary battery was prepared in this manner, and a battery performance evaluation test was performed at a confining pressure of 10 kN.

### [Battery Performance Evaluation Test]

The prepared all-solid-state lithium-ion secondary battery was charged up to 3.7 V at a constant current and constant potential at 0.1 C in an environment of 25°C, and then discharged up to 1.9 V at a constant current at 3 C to obtain a discharge capacity. The discharge capacity shown below is mAh per weight (g) of the positive electrode active material (mAh/g).

### (Evaluation Criteria)

A: The discharge capacity was greater than 30.
B: The discharge capacity was greater than 0 and 30 or less.
C: The discharge capacity was 0.

### Example 1

### 1. Mixing of Raw Materials

In a glove box adjusted to a nitrogen atmosphere with a dew point of -50°C, raw material powders of Li₂S, P₂S₅, and LiCl were mixed in a molar ratio of 1.9:0.5:1.6 and thoroughly stirred and mixed. The stirred and mixed raw materials were charged in an amount of 300 g into a carbon container with a dew point of -50°C or lower and a nitrogen atmosphere.

### 2. Formation of First Melt

The carbon container was heated to 300°C at a temperature increasing rate of 5°C/min and held at that temperature for 0.5 hours, and then heated to 700°C at a temperature increasing rate of 5°C/min and held at that temperature to form a melt surface.

### 3. Charging of Additional Raw Material

In a glove box adjusted to a nitrogen atmosphere with a dew point of -50°C, raw material powders prepared in the same molar ratio as the above raw material mixture were thoroughly stirred and mixed, placed in a sealed container, and then charged into a hopper connected to a fixed quantity feeder (Micron Feeder, manufactured by Aisin Nano Technologies Co., Ltd.) without being exposed to the atmosphere. A dew point in the hopper was also adjusted to -50°C or lower. Using the fixed quantity feeder, the mixed raw material was charged at a rate of 6 g/min into the carbon container in which the melt surface had been formed. A charging rate from a start to completion of charging of the mixed raw material was maintained at 2 mass% or less with respect to 100 mass% of the melt. At the same time as the charging, 2 SLM of N₂ was fed through the same piping. Further, simultaneously with the charging of the raw materials, a sulfur powder was fed at a rate of 0.6 g/min and the carbon container was filled with a sulfur gas.

### 4. Discharging, Cooling, and Solidifying

The melt flowed from a discharge port attached to the carbon container at a rate of 6 g/min and was rapidly cooled to obtain a solid as a sulfide-based solid electrolyte containing an amorphous phase and an argyrodite crystal phase.

### 5. Reheating Step

The obtained solid was pulverized in a cutter mill to obtain a coarse powder, which was then placed in a carbon container and crystallized at 400°C for 1 hour in a nitrogen gas atmosphere. Accordingly, Li_{5.4}PS_{4.4}Cl_{1.6} was obtained as a sulfide-based solid electrolyte having an argyrodite crystal structure with a crystal phase ratio of 90 vol% or more.

Among the above steps, "3. Charging of Additional Raw Material" and "4. Discharging, Cooling, and Solidifying" were carried out consecutively. That is, while additional raw materials were being charged, the obtained melt was continuously discharged, cooled, and solidified.

The lithium-ion conductivity of the obtained electrolyte was measured to be 5 mS/cm. Further, the battery performance was evaluated as A (discharge capacity: 38 mAh/g). The results are shown in Table 1.

### Example 2

A sulfide-based solid electrolyte powder was obtained in the same manner as in Example 1, except that, instead of the sulfur powder fed in "3. Charging of Additional Raw Material" of Example 1, sulfur was heated at 350°C to generate a sulfur vapor, and the sulfur vapor was fed into a carbon container to supply a sulfur gas atmosphere into the container.

The conductivity of the obtained electrolyte was measured to be 5 mS/cm. Further, the battery performance was evaluated as A (discharge capacity: 45 mAh/g). The results are shown in Table 1.

### Example 3

### 1. Heating of Container

A carbon container was heated to 700°C in the same manner as in Example 1.

### 2. Charging of Raw Material

The raw material was charged into the carbon container heated to 700°C in the same manner as in "3. Charging of Additional Raw Material" of Example 1. However, no sulfur powder was supplied.

### 3. Discharging, Cooling, and Solidifying

After the internal raw material was dissolved, the melt flowed from a discharge port attached to the carbon container at a rate of about 6 g/min and was rapidly cooled to obtain a solid as a sulfide-based solid electrolyte containing an amorphous phase and an argyrodite crystal phase.

### 4. Reheating Step

Next, the solid was pulverized in a cutter mill to obtain a coarse powder, which was then placed in a carbon container and crystallized at 400°C for 1 hour in a nitrogen gas atmosphere.

Among the above steps, "2. Charging of Raw Material" and "3. Discharge, cooling, and solidifying" were not performed continuously in conjunction with each other, but were performed spontaneously. That is, when the raw material was charged at a rate of 6 g/min in the absence of the first melt, the raw material immediately melted and was discharged. At this time, the melt was discharged at a discharge rate of about 0 g/min to 6 g/min, cooled, and solidified. When 10 g of the obtained electrolyte had been discharged after the start of charging, sampling was completed and evaluation was performed.

The obtained electrolyte had a crystal phase other than the argyrodite crystal, and conductivity thereof was measured to be 0.1 mS/cm. Further, the battery performance was evaluated as C (discharge capacity: 0 mAh/g). The results are shown in Table 1.

### Example 4

### 1. Mixing of Raw materials and Forming of First Melt

The raw materials were mixed in the same manner as in Example 1 to form a first melt having a melt surface.

### 2. Charging of Additional Raw Material

An additional raw material was charged in the same manner as in Example 1, except that no sulfur powder was fed.

### 3. Discharging, Cooling, and Solidifying

The melt flowed from a discharge port attached to the carbon container and was rapidly cooled to obtain a solid as a sulfide-based solid electrolyte containing an amorphous phase and an argyrodite crystal phase.

### 4. Reheating Step

The obtained solid was pulverized in a cutter mill to obtain a coarse powder, which was then placed in a carbon container and crystallized at 400°C for 1 hour in a nitrogen gas atmosphere.

According to the above procedure, a sulfide-based solid electrolyte powder was obtained in the same manner as in Example 1.

The obtained electrolyte had a crystal phase other than the argyrodite crystal, and conductivity thereof was measured to be 1 mS/cm. Further, the battery performance was evaluated as B (discharge capacity: 5 mAh/g). The results are shown in Table 1.

**[Table 1]**

| | First melt amount | Additional raw material charging rate | Sulfur supply | Discharge rate | Ionic conductivity | Battery performance |
|---|---|---|---|---|---|---|
| Example 1 | Melt 300 g | 6 g/min | Sulfur powder | 6 g/min | 5 mS/cm | A |
| Example 2 | Melt 300 g | 6 g/min | Sulfur vapor | 6 g/min | 5 mS/cm | A |
| Example 3 | Absence | 6 g/min | Absence | 6 g/min Spontaneously | 0.1 mS/cm | C |
| Example 4 | Melt 300 g | 6 g/min | Absence | 6 g/min | 1 mS/cm | B |

In both of Examples 1 and 2 which are inventive examples, evaluations of the lithium-ion conductivity and the battery are excellent. Accordingly, it is found that according to the present production method, the volatilization of the raw material in the electrolyte production process was prevented. Further, in Examples 1 and 2, by charging the additional raw material to the first melt having the melt surface, the second melt is obtained continuously, and the process moves to the subsequent cooling step. Accordingly, it is found that a large amount of sulfide-based solid electrolyte can be produced in a short time.

On the other hand, in Example 3 which is a comparative example, the first melt is not obtained, and the mixed raw material is directly heated to obtain the electrolyte, so that the ionic conductivity and the battery performance are inferior. Further, in Comparative Example 4 which is a comparative example, sulfur is not supplied when the additional raw material is charged to the first melt, resulting in poor ionic conductivity and battery performance.

Although various embodiments have been described above with reference to the drawings, it is needless to say that the present invention is not limited to such examples. It is obvious for a person skilled in the art that various modifications and variations can be made within the category described in the scope of claims and it is understood that such modifications and variations naturally belong to the technical scope of the present invention. Further, the components described in the above embodiment may be combined in any manner without departing from the spirit of the invention.

The present application is based on a Japanese Patent Application (No. 2022-079716) filed on May 13, 2022, contents of which are incorporated herein by reference.

### REFERENCE SIGNS LIST

10, 20, 30, 40 furnace
11 first melt
12 first sulfide-based solid electrolyte raw material
13 melt surface
21, 31, 41 second melt
22, 32 second sulfide-based solid electrolyte raw material
33a sulfur source
33b sulfur vapor
44 discharge portion
500 apparatus for producing sulfide-based solid electrolyte
50 furnace
51 first raw material supply portion
52 second raw material supply portion
53 discharge portion
54 cooling portion
55 sulfur supply portion

## Claims

1. A method for producing a sulfide-based solid electrolyte, the method comprising:
heating and melting a first sulfide-based solid electrolyte raw material in a furnace to obtain a first melt;
supplying a second sulfide-based solid electrolyte raw material to the first melt;
heating and melting an obtained mixture in a gas atmosphere containing a sulfur element; and
cooling an obtained second melt.

2. The method for producing a sulfide-based solid electrolyte according to claim 1, wherein the second sulfide-based solid electrolyte raw material is supplied at a rate of 5 mass%/min or less with respect to 100 mass% of the first melt.

3. The method for producing a sulfide-based solid electrolyte according to claim 1 or 2, wherein a composition of the first sulfide-based solid electrolyte raw material is the same as a composition of the second sulfide-based solid electrolyte raw material.

4. The method for producing a sulfide-based solid electrolyte according to claim 1 or 2, wherein the gas atmosphere containing the sulfur element is obtained by supplying a sulfur source to the first melt.

5. The method for producing a sulfide-based solid electrolyte according to claim 1 or 2, wherein the gas atmosphere containing the sulfur element is obtained by introducing a sulfur vapor into the furnace.

6. The method for producing a sulfide-based solid electrolyte according to claim 5, wherein the sulfur vapor is generated by heating sulfur in the furnace at 200°C to 450°C.

7. The method for producing a sulfide-based solid electrolyte according to claim 1 or 2, wherein the second sulfide-based solid electrolyte raw material is continuously supplied to the first melt.

8. The method for producing a sulfide-based solid electrolyte according to claim 1 or 2, wherein the second melt is continuously discharged from the furnace to be cooled.

9. The method for producing a sulfide-based solid electrolyte according to claim 1 or 2, wherein a heating temperature of the first sulfide-based solid electrolyte raw material or the second sulfide-based solid electrolyte raw material is 600°C or higher and lower than 900°C.

10. The method for producing a sulfide-based solid electrolyte according to claim 1 or 2, wherein the second melt is cooled using a twin-roller.

11. An apparatus for producing a sulfide-based solid electrolyte, the apparatus comprising:
a furnace;
a heating portion configured to heat the furnace;
a first raw material supply portion configured to supply a first sulfide-based solid electrolyte raw material to the furnace;
a second raw material supply portion configured to supply a second sulfide-based solid electrolyte raw material to a first melt obtained by heating and melting the first sulfide-based solid electrolyte raw material supplied to the furnace;
a discharge portion configured to discharge a second melt obtained by supplying the second sulfide-based solid electrolyte raw material to the first melt in the furnace; and
a cooling portion configured to cool the second melt discharged from the discharge portion.

12. The apparatus for producing a sulfide-based solid electrolyte according to claim 11, the apparatus comprising a sulfur supply portion configured to supply a sulfur source or a sulfur vapor to the furnace.

13. The apparatus for producing a sulfide-based solid electrolyte according to claim 11 or 12, wherein the second raw material supply portion continuously supplies the second sulfide-based solid electrolyte raw material to the first melt.

14. The apparatus for producing a sulfide-based solid electrolyte according to claim 11 or 12, wherein the second raw material supply portion quantitatively supplies the second sulfide-based solid electrolyte raw material to the first melt.

15. The apparatus for producing a sulfide-based solid electrolyte according to claim 11 or 12, wherein the cooling portion comprises a twin-roller.

16. The apparatus for producing a sulfide-based solid electrolyte according to claim 11 or 12, the apparatus comprising a reheating portion configured to reheat the sulfide-based solid electrolyte obtained by being cooled in the cooling portion.
